# EUROPEAN PATENT SPECIFICATION

(11) **EP 0 585 637 B1**
(45) Date of publication and mention of the grant of the patent: **07.04.1999**
(21) Application number: 93112417.6
(22) Date of filing: 03.08.1993
(51) Int. Cl.: A01C 17/00

(54) **Rotating spreader disc with removable vanes for spreading flowable material**
Schleuderscheibe einer Streuers mit abnehmbaren Wurfschaufeln
Disque d'épandage de matériau avec aubes enlevables

(30) Priority: 12.08.1992 DK 101192
(43) Date of publication of application: 09.03.1994
(73) Proprietor: A.P. Laursen A/S, DK-7171 Uldum (DK)
(72) Inventor: Nielsen, Thorkild, DK-7100 Vejle (DK); Laursen, Nils Jorn, DK-8722 Hedensted (DK)
(74) Representative: Roerboel, Leif

(56) References cited:
- EP-A- 0 402 712
- DE-A- 4 100 774
- FR-A- 2 450 551
- FR-A- 2 659 400

## Description

### TECHNICAL FIELD

The present invention relates to a rotating spreader disc for spreading flowable material, said spreader disc being of the kind set forth in the preamble of claim 1.

### BACKGROUND ART

A spreader disc of the kind referred to above is known from the German published specification No. DE-A-3.919.396, see especially Figures 5-7 with the associated text. In the spreader disc thus known, the securing member consists of a bolt with an attached wing nut, said wing nut to be loosened or tightened respectively, when the vane is to be removed or secured respectively. This known arrangement suffers from three substantial disadvantages, viz.
- firstly, that relatively long time is needed to loosen and tighten the wing nut,
- secondly, that the bolt with the wing nut is not protected against screwing-off of the wing nut, so that the latter, possibly also the bolt, is released and may fall down on the field, where these parts are not always easy to recover, and
- thirdly, that the force, with which the securing member - i.e. the bolt and the wing nut - keeps the spreader vane in question in engagement against the carrier disc, depends on the the force with which the user concerned has tightened the wing nut.

It is well-known from various areas of technology to use so-called over-centre mechanisms for easy securing and easy freeing of attachments. One example of the use of an over-centre mechanism is disclosed in FR-A-2,659,400, and other well-known uses are ski bindings and closures for jars used in households for preserving foods, as well as quick-coupling arrangements of various kinds.

### DISCLOSURE OF THE INVENTION

It is on this background the object of the present invention to provide a spreader disc of the kind referred to initially, that does not suffer from the disadvantages referred to above, by utilizing the principles of the over-centre mechanisms referred to above, and this object is achieved with a spreader disc, according to the present invention additionally exhibiting the features set forth in the characterizing clause of claim 1. By means of these features, the following advantages are achieved, cf. the above:
- firstly, quick and easy securing of the spreader vane to the carrier disc, as well as equally quick and easy removal without the use of tools,
- secondly, there are no nuts or screws likely to get lost, and
- thirdly a constant holding force is achieved.

Further embodiments of the spreader disc according to the invention, the effects of which - beyond what is self-evident - will also be explained below, are set forth in claims 2-6.

### BRIEF DESCRIPTION OF THE DRAWINGS

In the following detailed portion of the present description, the invention will be explained in more detail with reference to the exemplary embodiment of a rotating spreader disc with removable vanes according to the present invention shown on the drawing, on which
- Figure 1: shows the spreader disc seen from above with one of the two spreader vanes removed,
- Figure 2: at an enlarged scale shows the spreader vane shown in Figure 1, as viewed in the direction of the arrow II in Figure 1 with a pressure arm in an initial abutment position,
- Figure 3: is a view corresponding to Figure 2, but shows the pressure arm in the locking position,
- Figures 4 and 5: at the same scale as in Figures 2 and 3 show a spreader vane by itself, viewed in the direction of the arrow IV in Figure 5 and the arrow V in Figure 4 respectively,
- Figure 6: is a view corresponding to Figure 3 and showing a modified embodiment with a pressure shoe for protecting the surface of a carrier disc,
- Figure 7: shows the pressure shoe shown in Figure 6 in perspective, and
- Figure 8: is a view corresponding to Figure 5 of the modified embodiment.

### DESCRIPTION OF THE PREFERRED EMBODIMENT

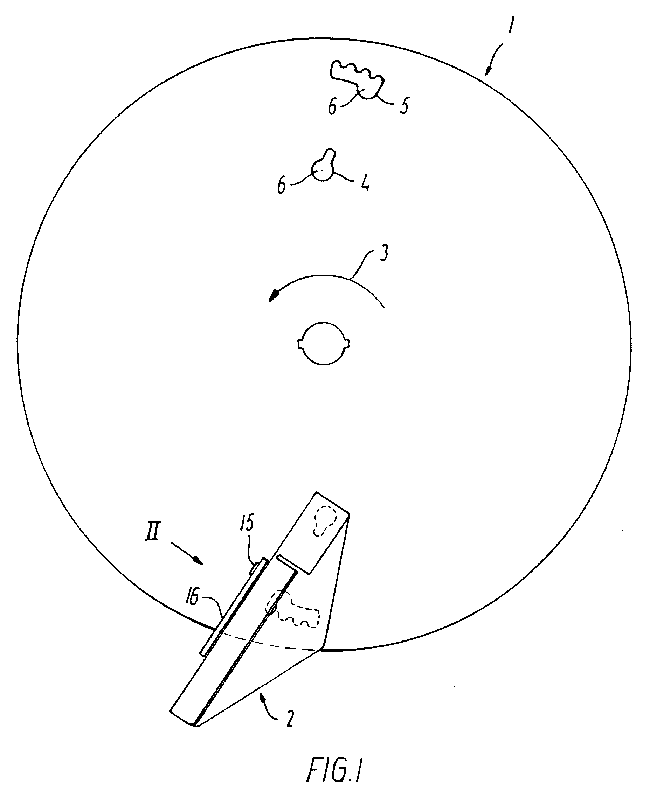

The spreader disc shown diagrammatically in Figure 1 consists in a manner known in principle of a plane or disc-shaped carrier disc 1, to which a number of spreader vanes 2 - in the present example two - of which only one is shown, is secured in a detachable and adjustable manner.

Together with the spreader vanes 2, the carrier disc 1 is intended to rotate in the direction shown by an arrow 3, thus spreading flowable solid material, e.g. artificial fertilizer, from above falling down on to the generally horizontal carrier disc 1, and by the latter and by the spreader vanes 2 being spread outwardly laterally.

With a view to securing the spreader vanes 2 detachably and adjustably to the carrier disc 1, the latter comprises in a known manner two securing apertures for each spreader vane, viz. a keyhole-like opening 4, in the following designated as the keyhole slot, as well as a toothed slot 5. Both apertures 4 and 5 have a widened part 6 large enough to allow passage of heads 7 and 8 respectively on holding studs 9 and 10 respectively, whilst apart from this, the apertures 4 and 5 are only large enough to accommodate the stems 11 and 12 respectively of the holding studs concerned.

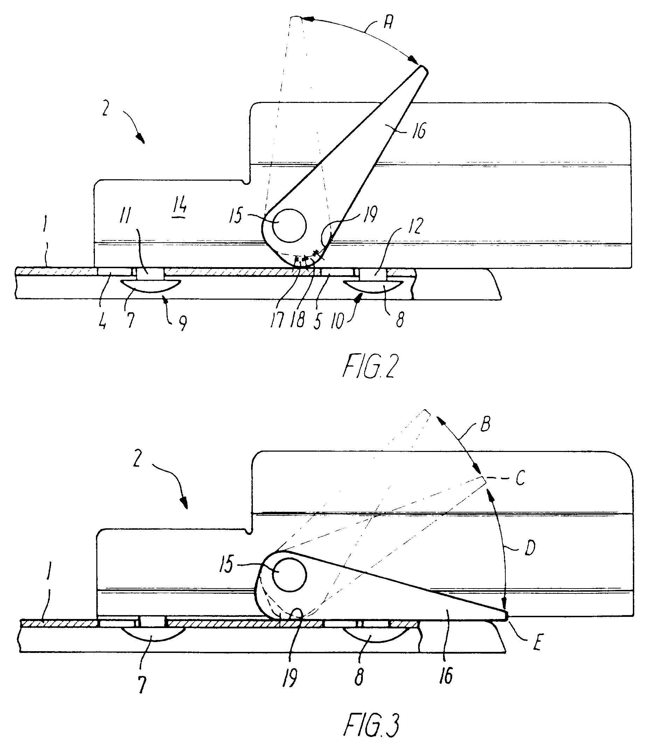

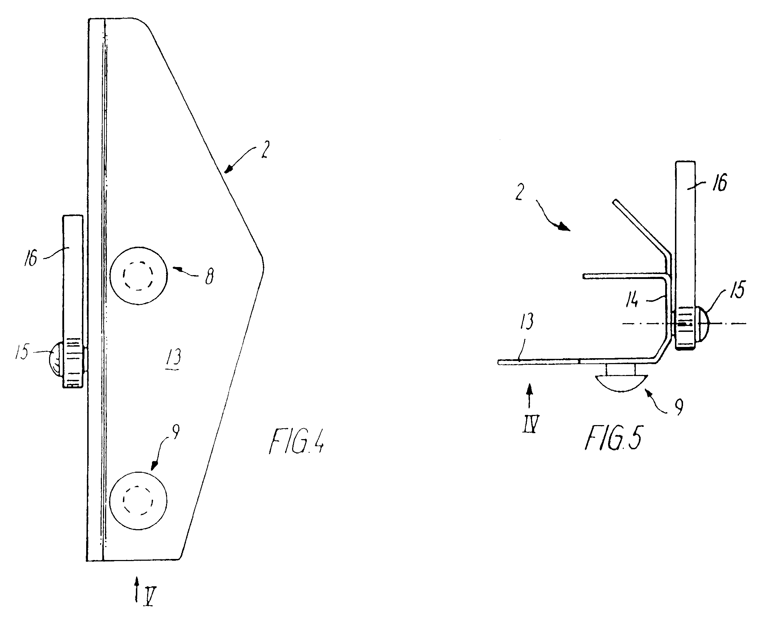

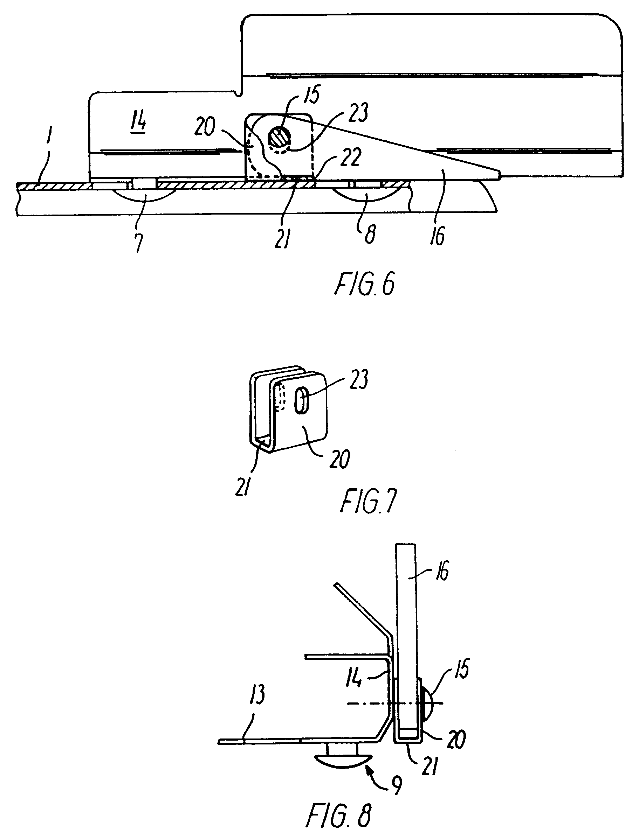

As will be evident from Figures 2-5, the holding studs 8 and 9 are secured to the lower side of the horizontal branch 13 of the spreader vane 2 in question, the vertical branch 14 of which on its outward side, i.e. the side facing away from the horizontal branch 13, is provided with a pivot stud 15, the axis of which is substantially parallel to the horizontal branch 13, cf. Figure 5.

On the pivot stud 15 is pivotably supported a pressure arm 16, shaped and placed in such a manner, that it, together with the carrier disc 1 and the spreader vane 2, forms an over-center mechanism for releasably securing each spreader vane 2 to the carrier disc 1. The functioning of the pressure arm 16 can best be explained with reference to Figures 2 and 3.

After the spreader vane 2 in question has been placed in the position shown in Figure 2, i.e. when the heads 7 and 8 on the holding studs 9 and 10 respectively have been inserted through the widened part 6 of the keyhole slot 4 and the toothed slot 5 respectively and displaced radially outwardly (i.e. towards the right in Figure 2), the pressure arms 16 is turned from an initial position, in which it is generally perpendicular to the carrier disc 1, through a first angular movement A to the abutment position shown in full lines in Figure 2, in which it abuts against the upper side of the carrier disc 1 with an initial part of a first pressure surface 17.

From the position shown in full lines in Figure 2, the pressure arm 16 is then moved through a second angular movement B, while the radius from the axis of the pivot stud 15 to the first pressure surface 17 increases, until the pressure arm 16 has reached a dead-center position C, in which the radius of the first pressure surface 17 is at a maximum, and where the first pressure surface 17 continues in a second pressure surface 18, the radius of which from this point decreases towards the transition to a third pressure surface 19. Obviously, the movement past the abutment position shown in full lines in Figure 2 can only take place, because the carrier disc 1 and/or the spreader vane 2 can be deflected elastically in the parts being acted upon during this movement. This deflection is, however, not shown in the drawing. In the dead-center position C, the transition point between the first and second pressure surfaces 17 and 18 respectively will abut against the carrier disc 1, whilst during a further angular movement, viz. a third angular movement D, the point of abutment is moved along the second pressure surface 18 while the latter's radius decreases, and the spreader vane 2, which during the second angular movement B towards the dead-center position has been urged to a maximum extent away from the carrier disc 1, again approaches the latter, but, due to its own elasticity and/or that of the carrier disc, still maintains the heads 7 and 8 on the holding studs 9 and 10 respectively in abutment against the lower side of the carrier disc 1, in a manner to be seen from Figure 3. Since the radius from the axis of the pivot stud 15 to the third pressure surface 19 varies through a minimum - the pressure surface 19 is substantially flat - the pressure arm 16 will, after completing the third angular movement D and taking up the locking position E shown in Figure 3, remain stably in the locking position, in which it is held by the springiness in the spreader vane 2 and/or the carrier disc 1, at the same time as the heads 7 and 8 are held in abutment against the lower side of the carrier disc 1, hence creating a sufficient frictional engagement to prevent the spreader vane 2 from leaving the operating position, in which it has been placed.

Since the force, with which the heads 7 and 8 are held in abutment against the lower side of the carrier disc 1, depends solely on the elasticity of those parts of the spreader vane 2 and/or the carrier disc 1 yielding elastically during the movement of the pressure arm seen from the abutment position shown in Figure 2 to the locking position E shown in Figure 3 and the resulting movement of the center of the pivot stud 15 from the position shown in Figure 2, in which the initial part of the first pressure surface 17 abuts against the carrier disc 1, to the locking position E shown in Figure 3, in which the third pressure surface 19 abuts against the carrier disc and hence creates a constant distance between the center of the pivot stud 15 and the upper side of the carrier disc 1, this friction-creating force will always be of the same magnitude, and is thus independent of the strength of the operator's fingers.

When the frictional engagement between the spreader vane 2 and the carrier disc 1 is to be released, this is done quite simply by turning the pressure arm 16 back to the initial position indicated in Figure 2, after which the spreader vane may be removed or adjusted in a different angle in a manner known per se by moving the spreader vane 2 slightly inwardly against the center of the carrier disc and turning it about the aperture 4 to the desired angular position, upon which it is again moved radially outwardly, so that the holding stud 10 engages the corresponding notch in the toothed slot 5. When the spreader vane has been placed in the new position, the pressure arm 16 is again turned towards the locking position as explained above.

As will be seen from Figures 1 and 3, the pressure arm 16 will in the locking position E protrude to such an extent beyond the circumference of the carrier disc 1, that the pressure arm in this position easily may be urged away from the locking position by pushing its freely protruding end upwards.

In the embodiment shown in Figures 6-8, a U-shaped pressure shoe 20, the bottom part or connecting part of which constitutes a pressure sole 21, is placed about the part of the pressure arm 16 surrounding the pivot stud 15. By means of long holes 23 in the two U-branches, the pressure shoe 20 is supported on the pivot stud 15 in such a manner, that it can be displaced through a small distance in the longitudinal direction of the long holes, but only to a limited extent in their transverse direction. When the pressure arm 16 is moved to the locking position shown in Figure 6, corresponding to the locking position E in Figure 3, the chain of events will be the same as explained above with reference to Figures 1-5, the sole exception being that the pressure sole 21 constitutes an intermediate layer between the pressure arm 16 and the carrier disc 1. Since the pressure shoe 20 cannot be moved to any extent of importance parallel to the surface of the carrier disc 1, this surface will not be subjected to that rubbing or chafing, to which it will be subjected in the exemplary embodiment shown in Figures 1-5, and which in the worst case can cause wear on the carrier disc. If, as a consequence of this rubbing or chafing, the pressure shoe 20 is worn down before the remainder of the spreader vane 2 is due to be replaced, it can easily be replaced by removing the pivot stud 15, to this purpose possibly having a thread (not shown). A recess 22, the bottom of which lies in continuation of the pressure surface, and the depth and length of which correspond to the thickness and the length of the pressure sole 21, allows the pressure arm 16 to abut against the carrier disc 1 with the remainder of the surface in question. In this manner, it is avoided that e.g. particles of fertilizer can get jammed between the pressure arm and the carrier disc.

A further advantage being achieved, so to speak at no extra cost, with the exemplary embodiment shown consists in that the pressure arm 16 in the locking position E shown in Figure 3 acts as a steadying brace for the spreader vane 2 when the latter during the rotation impinges against the material to be spread.

According to an embodiment not shown in the drawing, the mechanism for pulling the stud heads 7 and 8 into abutment with the carrier disc 1 is replaced by a so-called knee-joint or toggle mechanism. Such mechanisms are widely known, and a skilled person will be able to adapt them to the present use without other guidance than that provided by the present description.

### LIST OF PARTS

- 1: carrier disc
- 2: spreader vane
- 3: arrow
- 4: keyhole slot
- 5: toothed slot
- 6: widened part
- 7: head
- 8: head
- 9: holding stud
- 10: holding stud
- 11: stem
- 12: stem
- 13: horizontal branch
- 14: vertical branch
- 15: pivot stud
- 16: pressure arm
- 17: first pressure surface (part)
- 18: second pressure surface (part)
- 19: third pressure surface (part)
- 20: pressure shoe
- 21: pressure sole
- 22: recess
- 23: long holes
- A: first angular movement
- B: second angular movement
- C: dead-center position
- D: third angular movement
- E: locking position

## Claims

1. Rotating spreader disc for spreading flowable material and of the kind comprising
a) a plane or dish-shaped carrier disc (1), and
b) at least one spreader vane (2), releasably secured to one side of the carrier disc (1) by means of
c) releasable securing means (4,5,9,10) comprising
c1) in the carrier disc (1) at least one aperture (4,5),
c2) on each spreader vane (2) at least one holding stud (9,10), the stem (11,12) of which has a smaller cross-sectional dimension than its head (7,8), that is small enough to be able to pass through said aperture (4,5) in at least one position relative to the aperture, and
c3) at least one manually operable securing mechanism (15-19) adapted to secure each spreader vane (2) relative to the carrier disc (1) by pulling said head (7,8) against the opposite side of said disc (1) so as to form a frictional engagement preventing each spreader vane from moving relative to the carrier disc from the position, in which the securing means were actuated,
**characterized** in
d) that each securing mechanism (15-19) comprises an over-center mechanism adapted to during movement of a manoeuvering member (16) in one and the same direction for the purpose of said securing
d1) in a first part-movement (A+B) to urge the spreader vane (2) in a direction away from the carrier disc (1) so as to make the heads (7,8) of the holding studs (9,10) abut against the opposite side of the carrier disc and then to urge the spreader vane (2) in the same direction away from the carrier disc (1) under elastic deflection of those parts of the carrier disc (1) and/or the spreader vane (2) hereby being subjected to a load, said first part-movement (A+B) ending at the dead-center position (C), and
d2) in a second part-movement (D) to allow movement of said parts of the carrier disc (1) and/or the spreader vane (2), that have been subjected to a load during said second part-movement (A+B), in the opposite direction of the first part-movement (A+B), but to a somewhat shorter extent, so that after the end of the second part-movement (D), a part of said elastic deflection will be retained, the second part-movement (D) ending in a locking position (E), in which the manoeuvering member (16) is held by the elastic force being exerted by said parts being under load,
e) that the spreader vanes (2) and/or the carrier disc (1) as well as the manoeuvering member (16) are shaped and dimensioned in such a manner, that said elastic deflection may be produced by manual operation of the manoeuvering member, and that the elastic force exerted by said parts under load in said locking position (E) of the manoeuvering member (16) is sufficient to produce the requisite friction between the carrier disc (1) and each spreader vane (2) to provide the frictional engagement mentioned (in item c3 above), and
f) that the manoeuvering member (16) has such a length and is placed in such a manner, that in the locking position (E) it protrudes outside of the circumference of the carrier disc (1).

2. Spreader disc according to claim 1, **characterized** in that each securing mechanism (15-19) comprises a pressure arm (16) pivotably supported about a stud (15) extending substantially parallel to the surface of the carrier disc (1) and secured to the spreader vane (2), said pressure arm comprising a pressure surface extending about the stud (15) and comprising at least three parts (17,18,19) placed in sequence, viz. a first part (17), the greatest radial distance of which from the axis of the stud (15) corresponds to the distance between the axis of the stud and an opposing pressure surface on the carrier disc (1), when the heads (7,8) of the holding studs (9,10) are in light abutment against the opposite side of the carrier disc (1), a second part (18) the radial distance of which from the axis of the stud (15) is greater than the greatest radial distance therefrom of said first part (17), and a third part (19), the least radial distance of which from the axis of the stud (15) is greater than the greatest radial distance of said first part (17) therefrom, but less than the greatest radial distance of said second part (18) therefrom.

3. Spreader disc according to claim 1 or 2 and of the kind, on which each spreader vane (2) is shaped generally like a piece of angle iron, one branch (13) of which during operation abuts against the carrier disc (1), and the second branch (14) during operation engages flowable material supplied from above and throws it out sideways, **characterized** in
a) that the holding studs (9,10) or the apertures are placed on or shaped in said one branch (13) at a distance from said second branch (14), and
b) that each securing member (16) is adapted to co-operate with said second branch (14).

4. Spreader disc according to any one or any of the claims 1-3, **characterized** in that each spreader vane (2) is provided with a pressure shoe (20), that is anchored to the spreader vane and comprises a pressure sole (21), the one side (the upper side in Figure 6) of which is adapted to cooperate with the pressure surface (17,18,19) of the pressure arm (16), and the opposite side of which is adapted to cooperate with the surface of the carrier disc (1).

5. Spreader disc according to claim 4, **characterized** in that the pressure shoe (20) consists of a piece of flat iron bent into U-shape, in the U-branches of which long holes (23) extending at right angles to the pressure sole (21) are provided and adapted to anchor the pressure shoe to the pivot stud (15), there being between the head of the pivot stud (15) and the surface on the spreader vane, from which the pivot stud protrudes, a sufficient distance for the U-branches of the pressure shoe to be supported loosely with one on each side of the pressure arm.

6. Spreader disc according to claim 1, **characterized** in that each securing mechanism is constituted by a knee-joint mechanism or toggle mechanism adapted for limited movement beyond the position corresponding to "a straight knee".

## Patentansprüche

1. Schleuderscheibe eines Streuers zum Verteilen von schüttbarem Material der Art, die aufweist:
a) eine ebene Fläche oder scheibenförmige Trägerscheibe (1) und
b) mindestens eine Streuerschaufel (2), die an einer Seite der Trägerscheibe (1) abnehmbar befestigt ist mit Hilfe von
c) lösbaren Befestigungseinrichtungen (4, 5, 9, 10), die aufweisen:
c1) in der Trägerscheibe (1) mindestens eine Öffnung (4, 5),
c2) auf jeder Streuerschaufel (2) mindestens einen Haltestift (9, 10), dessen Bolzen (11, 12) eine kleinere Querschnittsabmessung als sein Kopf (7, 8) hat, die klein genug ist, um zumindest an einer Position relativ zur Öffnung durch die Öffnung (4, 5) zu gehen, und
c3) mindestens einen manuell bedienbaren Befestigungsmechanismus (15 - 19), der geeignet ist, jede Streuerschaufel (2) relativ zur Trägerscheibe (1) zu befestigen, indem der Kopf (7, 8) gegen die entgegengesetzte Seite der Scheibe (1) gezogen wird, um ein reibschlüssiges Ineinandergreifen zu bilden, das verhindert, daß jede Streuerschaufel (2) sich relativ zur Trägerscheibe von der Position weg bewegt, in der die Befestigungseinrichtung betätigt wurde,
dadurch gekennzeichnet,
d) daß jeder Befestigungsmechanismus (15 - 19) einen Einrastmechanismus aufweist, der geeignet ist, während der Bewegung eines Manövrierglieds (16) in ein und dieselbe Richtung zum Zweck der Befestigung
d1) in einer ersten Teilbewegung (A+B) die Streuerschaufel (2) in eine Richtung von der Trägerscheibe (1) weg zu drücken, um die Köpfe (7, 8) der Haltestifte (9, 10) dazu zu bringen, gegen die entgegengesetzte Seite der Trägerscheibe zu stoßen und dann die Streuerschaufel (2) bei elastischer Verbiegung derjenigen Teile der Trägerscheibe (1) und/oder der Streuerschaufel (2) in die gleiche Richtung von der Trägerscheibe (1) weg zu drücken, wodurch sie einer Belastung ausgesetzt werden, wobei die erste Teilbewegung (A+B) an der Totpunktposition (C) endet, und
d2) in einer zweiten Teilbewegung (D) die Bewegung der genannten Teile der Trägerscheibe (1) und/oder der Streuerschaufel (2), die während der ersten Teilbewegung (A+B) einer Belastung unterzogen waren, in die zur ersten Teilbewegung (A+B) entgegengesetzte Richtung, aber in einem etwas geringeren Ausmaß, zu ermöglichen, so daß nach dem Ende der zweiten Teilbewegung (D) ein Teil der elastischen Verbiegung beibehalten wird, wobei die zweite Teilbewegung (D) an einer Sperrposition (E) endet, bei der das Manövrierglied (16) durch die elastische Kraft, die durch die genannten Teile unter Belastung ausgeübt wird, gehalten wird,
e) daß die Streuerschaufeln (2) und/oder die Trägerscheibe (1) ebenso wie das Manövrierglied (16) in einer derartigen Weise geformt und dimensioniert sind, daß die elastische Verbiegung durch manuelle Bedienung des Manövrierglieds erzeugt werden kann und daß die durch die genannten Teile unter Belastung in der Sperrposition (E) des Manövrierglieds (16) ausgeübte elastische Kraft ausreicht, um die erforderliche Reibung zwischen der Trägerscheibe (1) und jeder Streuerschaufel (2) zu erzeugen, um das erwähnte (in Punkt c3 weiter oben) reibschlüssige Ineinandergreifen zu liefern, und
f) daß das Manövrierglied (16) eine derartige Länge hat und auf eine derartige Weise positioniert ist, daß es in der Sperrposition (E) außerhalb des Umfangs der Trägerscheibe (1) vorragt.

2. Streuerscheibe nach Anspruch 1, dadurch gekennzeichnet, daß jeder Befestigungsmechanismus (15 - 19) einen Druckarm (16) aufweist, der drehbar um einen Stift (15) gehalten wird, welcher sich im wesentlichen parallel zur Oberfläche der Trägerscheibe (1) erstreckt und an der Streuerschaufel (2) befestigt ist, wobei der Druckarm eine Druckfläche aufweist, die sich um den Stift (15) herum erstreckt und mindestens drei in Folge plazierte Teile (17, 18, 19) aufweist, nämlich einen ersten Teil (17), dessen größter Abstand von der Achse des Stifts (15) dem Abstand zwischen der Achse des Stifts und einer entgegengesetzten Druckfläche auf der Trägerscheibe (1) entspricht, wenn die Köpfe (7, 8) der Haltestifte (9, 10) leicht gegen die entgegengesetzte Seite der Trägerscheibe (1) stoßen, einen zweiten Teil (18), dessen radialer Abstand von der Achse des Stifts (15) größer als der größte radiale Abstand des ersten Teils (17) davon ist, und einen dritten Teil (19), dessen geringster radialer Abstand von der Achse des Stifts (15) größer als der größte radiale Abstand des ersten Teils (17) davon, aber geringer als der größte radiale Abstand des zweiten Teils (18) davon ist.

3. Streuerscheibe nach Anspruch 1 oder 2 von der Art, auf der jede Streuerschaufel (2) im allgemeinen wie ein Stück Winkeleisen geformt ist, von dem ein Arm (13) während des Betriebs gegen die Trägerscheibe (1) stößt und der zweite Arm (14) während des Betriebs in von oben geliefertes schüttbares Material greift und es seitwärts nach außen wirft, dadurch gekennzeichnet,
a) daß die Haltestifte (9, 10) oder die Öffnungen in einem Abstand von dem zweiten Arm (14) auf dem einen Arm (13) plaziert oder darin geformt sind, und
b) daß jedes Befestigungsglied (16) geeignet ist, mit dem zweiten Arm (14) zusammenzuwirken.

4. Streuerscheibe nach einem einzelnen oder einem der Ansprüche 1 bis 3, dadurch gekennzeichnet, daß jede Streuerschaufel (2) mit einem Druckschuh (20) versehen ist, der an der Streuerschaufel verankert ist und eine Drucksohle (21) aufweist, deren eine Seite (die obere Seite in Figur 6) geeignet ist, mit der Druckfläche (17, 18, 19) des Druckarms (16) zusammenzuwirken und deren gegenüberliegende Seite geeignet ist, mit der Oberfläche der Trägerscheibe (1) zusammenzuwirken.

5. Streuerscheibe nach Anspruch 4, dadurch gekennzeichnet, daß der Druckschuh (20) aus einem Stück flachem in U-Form gebogenem Eisen besteht, in dessen U-Armen sich in rechten Winkeln zu der Drucksohle (21) erstreckende lange Löcher (23) vorgesehen sind, die geeignet sind, den Druckschuh an dem Drehstift (15) zu verankern, wobei es zwischen dem Kopf des Drehstifts (15) und der Oberfläche der Streuerschaufel, von der der Drehstift vorsteht, einen ausreichenden Abstand für die U-Arme des Druckschuhs gibt, die mit einem Arm auf jeder Seite des Druckarms lose gehalten werden sollen.

6. Streuerscheibe nach Anspruch 1, dadurch gekennzeichnet, daß jeder Befestigungsmechanismus aus einem Kniehebel- oder Kippmechanismus gebildet wird, der für eine begrenzte Bewegung über die einem "ausgestreckten Knie" entsprechende Position hinaus geeignet ist.

## Revendications

1. Disque d'épandage rotatif destiné à épandre un matériau capable de s'écouler, du type qui comprend :
a) un disque de support plan en forme de plateau (1), et
b) au moins une aube d'épandage (2) attachée de façon détachable sur un côté du disque de support (1) au moyen de :
c) moyens de fixation détachables (4, 5, 9, 10) comprenant
c1) dans le disque de support (1) au moins une ouverture (4,5),
c2) sur chaque aube d'épandage (2) au moins une barre de maintien (9, 10), dont la tige (11, 12) présente en section transversale une dimension plus petite que sa tête (7, 8), qui est suffisamment petite pour être capable de passer à travers ladite ouverture (4, 5) dans au moins une position par rapport à l'ouverture, et
c3) au moins un mécanisme de fixation à actionnement manuel (15-19) adapté à fixer chaque aube d'épandage (2) par rapport au disque de support (1) en tirant ladite tête (7, 8) contre le côté opposé dudit disque (1) de façon à former un engagement de friction qui empêche à chaque aube d'épandage de se déplacer par rapport au disque de support à partir de la position dans laquelle les moyens de fixation ont été actionnés,
caractérisé en ce que :
d) chaque mécanisme de fixation (15-19) comprend un mécanisme à dépassement de point mort adapté à entraîner le mouvement d'un élément de manoeuvre (16) dans une seule et même direction pour les besoins de cette fixation,
d1) dans un premier mouvement partiel (A + B) afin de repousser l'aube d'épandage (2) dans une direction en éloignement du disque de support (1) de façon à amener les têtes (7, 8) des barres de maintien (9, 10) en butée contre le côté opposé du disque de support, puis de repousser l'aube d'épandage (2) dans la même direction en éloignement du disque de support (1) avec déflexion élastique de celles des parties du disque de support (1) et/ou de l'aube d'épandage (2) qui sont de ce fait soumises à une charge, ledit premier mouvement partiel (A + B) se terminant à la position de point mort (C), et
d2) dans un deuxième mouvement partiel (D) afin de permettre le mouvement desdites parties du disque de support (1) et/ou de l'aube d'épandage (2) qui ont été soumises à une charge pendant ledit deuxième mouvement partiel (A + B), dans la direction opposée au premier mouvement partiel (A + B) mais dans une étendue quelque peu plus courte, de sorte qu'après la fin du deuxième mouvement partiel (D), une partie de ladite déflexion élastique sera conservée, le deuxième mouvement partiel (D) se terminant dans une position de verrouillage (E) dans laquelle l'élément de manoeuvre (16) est tenu par la force élastique qui est exercée par lesdites parties qui sont sous charge,
e) les aubes d'épandage (2) et/ou le disque de support (1) ainsi que l'élément de manoeuvre (16) étant conformés et dimensionnés de telle manière que ladite déflexion élastique peut être produite par actionnement manuel de l'élément de manoeuvre, et en ce que la force élastique exercée par lesdites parties sous charge dans ladite position de verrouillage (E) de l'élément de manoeuvre (16) est suffisante pour produire la friction requise entre le disque de support (1) et chaque aube d'épandage (2) pour assurer l'engagement en friction mentionné ci-dessus (dans le point c3), et
f) l'élément de manoeuvre (16) a une telle longueur et il est placé d'une telle manière que dans la position de verrouillage (E) il fait saillie vers l'extérieur de la circonférence du disque de support (1).

2. Disque d'épandage selon la revendication 1, caractérisé en ce que chaque mécanisme de fixation (15-19) comprend un bras de pression (16) supporté en pivotement autour d'un téton (15) qui s'étend sensiblement parallèlement à la surface du disque de support (1) et fixé à l'aube d'épandage (2), ledit bras de pression comprenant une surface de pression qui s'étend autour du téton (15) et comprenant au moins trois parties (17, 18, 19) placées en séquence, c'est-à-dire une première partie (17) dont la plus grande distance radiale depuis l'axe du téton (15) correspond à la distance entre l'axe du téton et une surface de pression opposée sur le disque support (1), lorsque les têtes (7, 8) des barres de maintien (9, 10) sont légèrement en butée contre le côté opposé du disque de support (1), une deuxième partie (18) dont la distance radiale depuis l'axe du téton (15) est plus grande que la plus grande distance radiale de ladite première partie (17) depuis ledit axe, et une troisième partie (19) dont la distance radiale minimum depuis l'axe du téton (15) est plus grande que la plus grande distance radiale de ladite première partie (17) depuis ledit axe, mais inférieure à la plus grande distance radiale de ladite deuxième partie (18) depuis cet axe.

3. Disque d'épandage selon l'une ou l'autre des revendications 1 et 2, du genre sur lequel chaque aube d'épandage (2) a généralement la forme d'une pièce de fer en angle, dont une branche (13) vient buter pendant le fonctionnement contre le disque de support (1), et la deuxième branche (14) vient engager pendant le fonctionnement du matériau capable de s'écouler qui est fourni depuis le dessus, et rejette ce matériau sur les côtés, caractérisé en ce que :
a) les barres de maintien (9, 10) ou les ouvertures sont placées sur ou formées dans ladite première branche (13) à une distance depuis ladite deuxième branche (14), et
b) chaque élément de fixation (16) est adapté à coopérer avec ladite deuxième branche (14).

4. Disque d'épandage selon l'une quelconque des revendications 1 à 3, caractérisé en ce que chaque aube d'épandage (2) est pourvue d'un sabot de pression (20) lequel est ancré sur l'aube d'épandage et comprend une semelle de pression (21), dont l'un des côtés (le côté supérieur à la figure 6) est adapté à coopérer avec la surface de pression (17, 18, 19) du bras de pression (16), et dont le côté opposé est adapté à coopérer avec la surface du disque de support (1).

5. Disque d'épandage selon la revendication 4, caractérisé en ce que le sabot de pression (20) est constitué par une pièce de fer plat cintré en forme de U, dans les branches duquel sont ménagés des perçages oblongs (23) qui s'étendent à angle droit pas rapport à la semelle de pression (21), ces perçages étant adaptés à ancrer le sabot de pression sur le téton de pivotement (15), une distance suffisante étant prévue entre la tête du téton de pivotement (15) et la surface de l'aube d'épandage de laquelle fait saillie le téton de pivotement, afin que les branches du U du sabot de pression soient supportées de manière lâche sur chaque côté respectif du bras de pression.

6. Disque d'épandage selon la revendication 1, caractérisé en ce que chaque mécanisme de fixation est constitué par un mécanisme à genouillère ou mécanisme à bascule adapté à effectuer un mouvement limité au-delà de la position correspondant à une genouillère "rectiligne".
